(19) Europäisches Patentamt / European Patent Office / Office européen des brevets

(11) **EP 4 063 039 A1**

(12) **EUROPEAN PATENT APPLICATION**
published in accordance with Art. 153(4) EPC

(43) Date of publication:
**28.09.2022   Bulletin 2022/39**

(21) Application number: **20888820.6**

(22) Date of filing: **19.11.2020**

(51) International Patent Classification (IPC):
**B22C 1/22** (2006.01)       **B22C 1/02** (2006.01)
**B22C 1/10** (2006.01)       **B22C 9/02** (2006.01)
**B33Y 70/00** (2020.01)

(52) Cooperative Patent Classification (CPC):
**B22C 1/02; B22C 1/10; B22C 1/22; B22C 9/02;
B29C 64/165; B29C 64/307; B33Y 70/00**

(86) International application number:
**PCT/JP2020/043298**

(87) International publication number:
**WO 2021/100838 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.11.2019   JP 2019211809**

(71) Applicant: **Kinsei Matec Co., Ltd.
Osaka-shi, Osaka 541-0046 (JP)**

(72) Inventors:
• **KOYANAGI, Seiichi
  Yokkaichi-shi, Mie 510-0874 (JP)**

• **WAKUTA, Ryuji
  Yokkaichi-shi, Mie 510-0874 (JP)**
• **OOJI, Naoto
  Yokkaichi-shi, Mie 510-0874 (JP)**
• **HAYASHI, Hiroyuki
  Toyonaka-shi, Osaka 561-0829 (JP)**
• **KURIHARA, Masataka
  Toyonaka-shi, Osaka 561-0829 (JP)**

(74) Representative: **SSM Sandmair
Patentanwälte Rechtsanwalt
Partnerschaft mbB
Joseph-Wild-Straße 20
81829 München (DE)**

(54)   **CASTING SAND AND KIT FOR SAND MOLD**

(57)   Provided is casting sand including sand and a solid acid catalyst mixed with the sand.

FIG. 4A

EP 4 063 039 A1

**Description**

TECHNICAL FIELD

The present invention relates to casting sand and a sand mold kit.

BACKGROUND ART

To produce a product (casting) by casting, first, a mold is made. Then, a material (e.g., metal, etc.) that has been melted is poured into the mold. In this manner, the casting is formed into a predetermined shape.
For such a mold, a sand mold made by adding a curing agent to casting sand, then adding a binder thereto, and curing the binder has been known.
For the casting sand used for the sand mold, for example, casting sand in which a liquid curing agent including p-toluenesulfonic acid and sulfuric acid is kneaded in a sand mixture of natural silica sand and artificial sand has been proposed (see, for example, Patent Literature 1).

Citation List

Patent Document

Patent Document 1: Japanese Unexamined Patent Publication No. 2013-240799

SUMMARY OF THE INVENTION

PROBLEMS TO BE SOLVED BY THE INVENTION

However, even if the binder is added to the casting sand described in Patent Literature 1, the binder cannot be sufficiently cured, which may cause molding failure in a sand mold. In particular, it has been desirable in recent years to efficiently make a sand mold by adding a binder to casting sand and quickly curing the binder.
The present invention provides casting sand and a sand mold kit, with which a sand mold can be efficiently made.

MEANS FOR SOLVING THE PROBLEM

The present invention [1] includes casting sand including sand and a solid acid catalyst mixed with the sand.
With this configuration, as compared with the case where a liquid acid catalyst is mixed with sand, when a binder is added to the casting sand, the binder can be quickly cured, so that a sand mold can be effectively made.
The present invention [2] includes the casting sand described in [1] above, in which the solid acid catalyst includes solid heteropoly acid.
With this configuration, when a binder is added to the casting sand, the binder can be reliably cured.
The present invention [3] includes the casting sand described in [2] above, in which the solid acid catalyst includes tungstosilicic acid.
With this configuration, as compared with the case where the solid acid catalyst includes another solid heteropoly acid, the amount of the solid acid catalyst used can be reduced and the binder can be stably cured.
The present invention [4] includes the casting sand described in any one of the above-described [1] to [3], in which the solid acid catalyst contains at least first particles having an average primary particle size of 5 $\mu$m or less, and a content of the first particles in the solid acid catalyst is 20% by mass or more.
With this configuration, the strength of the sand mold made by adding the binder to the casting sand can be improved.
The present invention [5] includes the casting sand described in any one of the above-described [1] to [4], in which the solid acid catalyst contains at least second particles having an average primary particle size of more than 5 $\mu$m and 40 $\mu$m or less, and a content of the second particles in the solid acid catalyst is 20% by mass or more.
However, making of a sand mold by three-dimentional additive manufacturing method (that is, 3D printer) has also been examined. In three-dimentional additive manufacturing, a sand mold is made by repeating a step of forming layers of casting sand, and a step of adding a binder to the casting sand layer to solidify the binder added portion of the casting sand layer. Then, the casting sand where the binder is not added is removed from the sand mold.
Therefore, excellent cleanability capable of smoothly removing the casting sand where the binder is not added from the sand mold is desired.
In the above-described casting sand, the content of the second particles in the solid acid catalyst is the above-described lower limit or more. Therefore, the cleanability of the casting sand can be improved.

The present invention [6] includes a sand mold kit including casting sand described in any one of the above-described [1] to [5], and a binder containing a furan resin precursor and an organic solvent, the binder for solidifying the casting sand, in which a content of the organic solvent in the binder is 10% by mass or more and 30% by mass or less.

With this configuration, the strength of the sand mold made by adding the binder to the casting sand can be reliably improved.

The present invention [7] includes the sand mold kit described in [6] above, in which the casting sand further includes fine particles having an average primary particle size of 20 $\mu$m or less.

With this configuration, even containing of an organic solvent in the binder can ensure excellent cleanability of the casting sand.

EFFECTS OF THE INVENTION

The casting sand and the sand mold kit according to the present invention can efficiently make a sand mold.

BRIEF DESCRIPTION OF THE DRAWINGS

FIG. 1 is a plan view of an embodiment of a 3D printer in which casting sand can be used.

FIG. 2 is a cross-sectional view taken along line A-A of a recoater shown in FIG. 1.

FIG. 3A is a perspective view of the 3D printer shown in FIG. 1, showing a step of forming a first casting sand layer by the recoater. FIG. 3B illustrates the step shown in FIG. 3A.

FIG. 4A is a perspective view of the 3D printer shown in FIG. 1, showing a step of adding a binder to the first casting sand layer with a j et head. FIG. 4B illustrates the step shown in FIG. 4A.

FIG. 5A shows, following FIG. 4B, a step of forming a second casting sand layer on the first casting sand layer. FIG. 5B shows, following FIG. 5A, a step of adding the binder to the second casting sand layer.

FIG. 6A shows, following FIG. 5B, a step of making a sand mold by sequentially repeating the casting sand layer formation and binder addition. FIG. 6B is a perspective view of the sand mold shown in FIG. 6A.

FIG. 7A is a perspective view of a test pillar used in a bending strength test in Examples and Comparative Examples. FIG. 7B shows the test pillar shown in FIG. 7A set in a test device.

FIG. 8A shows a photograph of a test piece of Comparative Example 1 used in a cleanability test. FIG. 8B shows a photograph of a test piece of Example 26 used in the cleanability test.

DESCRIPTION OF THE EMBODIMENTS

(1) Casting sand

The casting sand includes sand and a solid acid catalyst as essential components. That is, the casting sand is a casting sand composition including sand and a solid acid catalyst.

(1-1) Sand

The sand contains a plurality of particles. The sand has a particle size distribution of, for example, 45 $\mu$m or more, preferably 53 $\mu$m or more, and for example, 300 $\mu$m or less, preferably 250 $\mu$m or less, more preferably 212 $\mu$m or less. The particle size distribution of the sand can be measured, for example, using a JIS standard sieve.

Examples of the sand include natural silica sand and artificial sand. The sand can be used singly, or can be used in combination of two or more.

The natural silica sand is silica sand mainly composed of quartz (silicon dioxide: $SiO_2$).

The artificial sand is produced by a known method (e.g., sintering method, fusion method, flame fusion method, etc.).

Of these sand, preferably, artificial sand is used.

Examples of the artificial sand include aluminum oxide sand (alumina sand), mullite sand, mullite-zircon sand, and spinel sand. The artificial sand can be used singly, or can be used in combination of two or more.

Of these artificial sand, preferably, mullite sand and spinel sand are used.

The mullite sand is mainly composed of a mixed composition compound (aluminosilicate) of aluminum oxide ($Al_2O_3$) and silicon dioxide ($SiO_2$).

In the mullite sand, the aluminum oxide content is, for example, 50% by mass or more, preferably 60% by mass or more, and for example, 90% by mass or less, preferably 80% by mass or less. The content of the components in the mullite sand can be measured, for example, by X-ray fluorescence elemental analysis (the same applies hereinafter).

In the mullite sand, the silicon dioxide content is, for example, 5% by mass or more, preferably 15% by mass or more, and for example, 45% by mass or less, preferably 40% by mass or less.

Such mullite sand can be prepared by a known production method (e.g., the method described in Japanese Unexamined Patent Publication No. S61-63333, the method described in Japanese Unexamined Patent Publication No. 2003-251434, etc.).

For the mullite sand, a commercially available product can also be used. For a commercially available product of the mullite sand, for example, ESPEARL (manufactured by YAMAKAWA SANGYO CO., LTD.), and CERABEADS (manufactured by ITOCHU CERATECH CORPORATION) are used.

The spinel sand has a spinel-type crystal structure. The spinel sand is mainly composed of a mixed composition compound of aluminum oxide ($Al_2O_3$), magnesium oxide ($MgO$), and silicon dioxide ($SiO_2$).

In the spinel sand, the aluminum oxide content is, for example, 50% by mass or more, preferably 60% by mass or more, and for example, 90% by mass or less, preferably 85% by mass or less, more preferably 70% by mass or less. The content of the components in the spinel sand can be measured, for example, by X-ray fluorescence elemental analysis (the same applies hereinafter).

In the spinel sand, the magnesium oxide content is, for example, 1% by mass or more, preferably 5% by mass or more, more preferably 15% by mass or more, and for example, 40% by mass or less, preferably 35% by mass or less.

In the spinel sand, the silicon dioxide content is, for example, more than 0% by mass, preferably 1% by mass or more, more preferably 3% by mass or more, and for example, 20% by mass or less, preferably 10% by mass or less.

The mixed composition compound of the spinel sand can also contain an additional component. For the additional component, for example, ion oxide (e.g., $Fe_2O_3$, etc.) is used.

In the spinel sand, the additional component content is, for example, 0% by mass or more, preferably 1% by mass or more, and for example, 10% by mass or less, preferably 5% by mass or less, more preferably 3% by mass.

To prepare such spinel sand, for example, first, an MgO refractory raw material and an $Al_2O_3$-$SiO_2$ refractory raw material are mixed and pulverized. More specifically, an MgO refractory raw material and an $Al_2O_3$-$SiO_2$ refractory raw material are introduced into a known pulverizer (e.g., a ball mill, etc.) and the pulverizer is then driven.

The MgO refractory raw material is a refractory raw material serving as a supply source of MgO. Examples of the MgO refractory raw material include magnesia clinker, calcined magnesite (hard burned magnesia, light burned magnesia), peridot, cordierite, magnesium carbonate, magnesium hydroxide, spinel, olivine, and MgO.

The MgO refractory raw material can be used singly, or can be used in combination of two or more.

Of these MgO refractory raw materials, preferably, calcined magnesite is used, more preferably, hard burned magnesia is used.

The $Al_2O_3$-$SiO_2$ refractory raw material is a refractory raw material serving as a supply source of aluminum oxide and silicon dioxide. Examples of the $Al_2O_3$-$SiO_2$ refractory raw material include synthetic mullite, aluminous shale, chamotte, baked bauxite, bauxite, flint clay, calcined flint clay, kyanite, sillimanite, andalusite, metakaolin, and kaolin.

The $Al_2O_3$-$SiO_2$ refractory raw material can be used singly, or can be used in combination of two or more.

An $Al_2O_3$ refractory raw material can be mixed with the $Al_2O_3$-$SiO_2$ refractory raw material. Examples of the $Al_2O_3$ refractory raw material include calcined bauxite, bauxite, aluminum hydroxide, molten alumina, and sintered alumina.

Of these $Al_2O_3$-$SiO_2$ refractory raw materials, preferably, a mixture of synthetic mullite and molten alumina is used.

In this manner, mixed raw material particles of the MgO refractory raw material and the $Al_2O_3$-$SiO_2$ refractory raw material are prepared.

The range of the aluminum oxide content in the mixed raw material particles is the same as that in the spinel sand, for example.

The range of the magnesium oxide content in the mixed raw material particles is the same as that in the spinel sand, for example.

The range of the silicon dioxide content in the mixed raw material particles is the same as that in the spinel sand, for example.

The mixed raw material particles have an average primary particle size of, for example, 1 $\mu$m or more, preferably

2 $\mu$m or more, and for example, 50 $\mu$m or less, preferably 10 $\mu$m or less. The average primary particle size of the mixed raw material particles can be measured by laser diffraction scattering method.

Then, the mixed raw material particles are granulated by a known granulation method.

Examples of the granulation method include wet granulation (e.g., rolling granulation, stirring granulation, etc.) and dry granulation (e.g., powder compression granulation, etc.), preferably, wet granulation, more preferably, rolling granulation.

When granulated by rolling granulation, preferably, the mixed raw material particles are stirred while adding a granulation accelerator to the mixed raw material particles.

Examples of the granulation accelerator include water, an organic solvent, an inorganic binder (e.g., the inorganic binder described in paragraph [0031] of Japanese Unexamined Patent Publication No. 2016-107320, etc.), and an organic binder (e.g., the organic binder described in paragraph [0032] of Japanese Unexamined Patent Publication No. 2016-107320, etc.).

The granulation accelerator can be used singly, or can be used in combination of two or more.

Of these granulation accelerators, preferably, polyvinyl alcohol is used.

The granulation accelerator (solid content) is added in an amount relative to 100 parts by mass of the mixed raw material particles of, for example, 1 part by mass or more, preferably 2 parts by mass or more, and for example, 10 parts by mass or less, preferably 5 parts by mass or less.

In this manner, granules of the mixed raw material particles (mixed granules) are prepared.

Then, the mixed granules are sieved to adjust the particle size distribution of the mixed granules to, for example, 75 $\mu$m or more and 250 $\mu$m or less.

Then, the mixed granules are sintered by heating to the following sintering temperature in the atmosphere. More specifically, the mixed granules are introduced into a known sintering furnace (e.g., a rotary kiln furnace), and the inside of the sintering furnace is heated to the following sintering temperature.

The sintering temperature is, for example, 1400°C or more, preferably 1500°C or more, and for example, 1900°C or less. The sintering time is, for example, 15 minutes or more, preferably 30 minutes or more, and for example, 60 minutes or less, preferably 45 minutes or less.

At this time, the MgO refractory raw material and the $Al_2O_3$-$SiO_2$ refractory raw material are allowed to react to form a spinel-type crystal structure. In this manner, a sintered material of the mixed granules is prepared.

Then, as necessary, oversized particles having a primary particle size exceeding the upper limit of the particle size distribution of the sand described above and microparticles having a primary particle size less than the lower limit of the particle size distribution of the sand described above are removed from the sintered material of the mixed granules.

To remove the oversized particles and the microparticles, for example, the sintered material of the mixed granules is sieved.

The spinel sand is produced in the above-described manner.

The method for producing the spinel sand is not limited to the above-described method.

For example, first, the MgO refractory raw material and the $Al_2O_3$-$SiO_2$ refractory raw material are separately pulverized. In this manner, MgO raw material particles and $Al_2O_3$-$SiO_2$ raw material particles are separately prepared. Then, the MgO raw material particles and the $Al_2O_3$-$SiO_2$ raw material particles are mixed to prepare mixed raw material particles. The mixed raw material particles are granulated in the same manner as above. Thereafter, the mixed granules thus obtained are sintered in the same manner as above.

This also allows the spinel sand to be produced.

However, from the viewpoint of acid consumption of the sand to be described later, the embodiment in which the MgO refractory raw material and the $Al_2O_3$-$SiO_2$ refractory raw material are mixed and pulverized to prepare mixed raw material particles is more preferable as compared with the embodiment in which the MgO raw material particles and the $Al_2O_3$-$SiO_2$ raw material particles that have been separately prepared are mixed to prepare mixed raw material particles.

For the spinel sand, a commercially available product can also be used. For a commercially available product of the spinel sand, for example, NICE BEADS (manufactured by KINSEI MATEC CO., LTD.) is used.

Of these mullite sand and spinel sand, more preferably, spinel sand is used. In other words, the sand more preferably includes spinel sand, even more preferably consists of spinel sand.

When the sand includes spinel sand, the cleanability of the casting sand can be reliably improved.

The acid consumption of such sand is, for example, 2.0 ml/50 g or less, preferably 1.0 ml/50 g or less. The acid consumption can be measured, for example, in accordance with JACT (Japan Foundry Society, Inc.) test method S-4 (the same applies hereinafter).

When the acid consumption of the sand is the above-described lower limit or less, deactivation of the solid acid catalyst mixed with the sand can be suppressed.

The content of the sand in the casting sand is, for example, 95% by mass or more, preferably 98.0% by mass or more, and, for example, 99.9% by mass or less.

(1-2) Solid acid catalyst

The solid acid catalyst is mixed with the sand. When a binder to be described later is added to the casting sand, the solid acid catalyst cures (in completely cured state) a furan resin precursor contained in the binder. The solid acid catalyst is in a solid state at ordinary temperature (25°C).

For the solid acid catalyst, for example, solid heteropoly acid is used. In other words, the solid acid catalyst includes, for example, solid heteropoly acid, and preferably consists of solid heteropoly acid.

Examples of the solid heteropoly acid include tungstosilicic acid ($H_4SiW_{12}O_{40}\cdot nH_2O$), silicomolybdic acid ($H_4SiMO_{12}O_{40}\cdot nH_2O$), phosphotungstic acid ($H_3PW_{12}O_{40}\cdot nH_2O$), phosphomolybdic acid ($H_3PMo_{12}O_{40}\cdot nH_2O$), silico-tungstic-molybdic acid ($H_4SiW_xMo_{12-x}O_{40}\cdot nH_2O$), phosphovanadotungstic acid ($H_{3+x}PV_xW_{12-x}O_{40}\cdot nH_2O$), phosphovanadomolybdic acid ($H_{3+x}PV_xMo_{12-x}O_{40}\cdot nH_2O$), phosphotungstic-molybdic acid ($H_{3+x}PW_xMo_{12-x}O_{40}\cdot nH_2O$), silicovanadotungstic acid ($H_{4+x}SiV_xW_{12-x}O_{40}\cdot nH_2O$), and silicovanadomolybdic acid ($H_{4+x}SiV_xMo_{12-x}O_{40}\cdot nH_2O$). In the chemical formulae of the solid heteropoly acid, n represents an integer of 0 or more, and x represents an integer of 1 or more and 11 or less.

The solid heteropoly acid can be used singly, or can be used in combination of two or more.

Of these solid heteropoly acids, preferably, tungstosilicic acid, phosphotungstic acid, phosphomolybdic acid, phosphovanadotungstic acid, and phosphovanadomolybdic acid are used, more preferably, heteropoly acid not containing an atom (e.g., P, S, etc.) which may cause gas defect in the casting is used, even more preferably, tungstosilicic acid ($H_4SiW_{12}O_{40}\cdot nH_2O$) is used. In other words, the solid heteropoly acid preferably includes tungstosilicic acid, more preferably consists of tungstosilicic acid.

When the solid heteropoly acid includes tungstosilicic acid, as compared with the case where the solid acid catalyst includes another solid heteropoly acid, the amount of the solid acid catalyst used can be reduced and the binder to be described later can be stably cured.

The content of such solid acid catalyst relative to 100 parts by mass of the sand is, for example, 0.1 parts by mass or more, preferably 0.3 parts by mass or more, and for example, 2 parts by mass or less, preferably 1 part by mass or less, more preferably 0.7 parts by mass or less.

The content of the solid acid catalyst in the casting sand is, for example, 0.1% by mass or more, preferably 0.2% by mass or more, and for example, 2% by mass or less, preferably 0.8% by mass or less, more preferably 0.6% by mass or less.

] The solid acid catalyst contains at least first particles having an average primary particle size of 5 $\mu$m or less and/or second particles having an average primary particle size of more than 5 $\mu$m and 40 $\mu$m or less.

The first particles have an average primary particle size of, for example, 0.2 $\mu$m or more, preferably 0.4 $\mu$m or more, and for example, 5 $\mu$m or less, preferably 3 $\mu$m or less. The average primary particle size of the first particles can be measured as, for example, a length average particle size of the maximum Feret's diameter based on JIS 8827-1 (2008).

The content of the first particles in the solid acid catalyst is, for example, 0% by mass or more, preferably 20% by mass or more, and for example, 100% by mass or less, preferably 80% by mass or less, more preferably 40% by mass or less.

When the content of the first particles in the solid acid catalyst is 20% by mass or more, the strength of a sand mold to be described later can be improved.

To prepare such first particles, first, the solid acid catalyst is dissolved in a solvent to prepare an acid catalyst solution.

Examples of the solvent include water, ethanol, and acetone. The solvent can be used singly, or can be used in combination of two or more. Of these solvents, preferably, water is used.

The acid catalyst solution has a solid acid catalyst concentration of, for example, 1.2 g/cm$^3$ or more, preferably 1.5 g/cm$^3$ or more, and for example, 3.0 g/cm$^3$ or less, preferably 2.5 g/cm$^3$ or less.

Then, the acid catalyst solution is treated by a known spray dryer.

For the spraying system of the spray dryer, for example, a four-fluid nozzle system and an atomizer type disc system are used.

In preparation of first particles, the four fluid nozzle system is preferably selected as the spraying system of the spray dryer.

The spray dryer has an inlet temperature of, for example, 130°C or more, preferably 150°C or more, and for example, 220°C or less, preferably 200°C or less.

The spray dryer has an exhaust temperature of, for example, 60°C or more, preferably 80°C or more, and for example, 140°C or less, preferably 120°C or less.

The spray dryer has a differential pressure in a tower of, for example, 0.6 kPa or more, preferably 0.8 kPa or more, and for example, 1.4 kPa or less, preferably 1.2 kPa or less.

Air supply volume, nozzle air, and liquid feeding speed are appropriately changed.

In this manner, a dry powder is prepared. Then, as necessary, the dry powder is sieved so as to have the above-described average primary particle size of the first particles. The first particles are prepared in the above-described manner.

The second particles have an average primary particle size of, for example, more than 5 μm, preferably 10 μm or more, and for example, 40 μm or less, preferably 30 μm or less. The average primary particle size of the second particles can be measured as, for example, a length average particle size of the maximum Feret's diameter based on JIS 8827-1 (2008).

The content of the second particles in the solid acid catalyst is, for example, 0% by mass or more, preferably 20% by mass or more, more preferably 60% by mass or more, and for example, 100% by mass or less, preferably 80% by mass or less.

When the content of the second particles in the solid acid catalyst is 20% by mass or more, the cleanability of the casting sand can be reliably improved.

To prepare such second particles, first, an acid catalyst solution is prepared in the same manner as the preparation of the first particles. Then, the acid catalyst solution is treated by a known spray dryer.

In preparation of second particles, the atomizer type disc system is preferably selected as the spraying system of the spray dryer.

The spray dryer has an inlet temperature of, for example, 140°C or more, preferably 160°C or more, and for example, 220°C or less, preferably 210°C or less.

The spray dryer has an exhaust temperature of, for example, 70°C or more, preferably 90°C or more, and for example, 150°C or less, preferably 130°C or less.

In this manner, a dry powder is prepared. Then, as necessary, the dry powder is sieved so as to have the above-described average primary particle size of the second particles. The second particles are prepared in the above-described manner.

When the solid acid catalyst contains the first particles and the second particles, the content of the second particles relative to a total sum of the first particles and the second particles is, for example, 60% by mass or more and 80% by mass or less.

(1-3) Fine particles

The casting sand can further contain fine particles as an optional component.

When the casting sand contains fine particles, even containing of an organic solvent in the binder to be described later can ensure excellent cleanability of the casting sand.

The fine particles have an average primary particle size of, for example, 0.5 μm or more, and for example, 20 μm or less, preferably 15 μm or less, more preferably 10 μm or less, even more preferably 5 μm or less, particularly preferably 3 μm or less. The average primary particle size of the fine particles can be measured, for example, by the following conditions.

Device: X-ray sedimentation device (e.g., SediGraph III, manufactured by Micromeritics Instrument Corporation, etc.)

Sample: 3.5 g
Medium type: 0.2% by mass aqueous solution of hexametaphosphoric acid
Medium volume: 80 ml
Stirring time: 30 seconds
Ultrasonic time: 30 seconds (same as stirring)
Density setting: 4.6 g/cm$^3$
Reynolds number setting: 0.47

When the average primary particle size of the fine particles is the above-described lower limit or more, the strength of the sand mold to be described later can be reliably improved. When the average primary particle size of the fine particles is the above-described upper limit or less, the cleanability of the casting sand can be further improved.

Examples of the fine particles include zircon fine particles, alumina fine particles, and silica fine particles.

The fine particles can be used singly, or can be used in combination of two or more.

Of these fine particles, preferably, zircon fine particles are used.

The content of the fine particles relative to 100 parts by mass of the sand is, for example, 0.3 parts by mass or more, preferably 0.5 parts by mass or more, more preferably 1.0 part by mass or more, and for example, 2 parts by mass or less, preferably 1.5 parts by mass or less.

The content of the fine particles in the casting sand is, for example, 0% by mass or more, preferably 0.5% by mass or more, and for example, 2% by mass or less, preferably 1.2% by mass or less.

(2) Sand mold kit

The above-described casting sand is suitably used for making of various molds. For use of the casting sand, for example, three-dimensional additive manufacturing (3D printer), hand molding, and machine molding are used, preferably, three-dimensional additive manufacturing (3D printer) is used. In other words, the casting sand is particularly useful as casting sand for three-dimensional additive manufacturing (for 3D printer).

The above-described casting sand may be distributed singly or may be included in the sand mold kit and distributed.

The sand mold kit includes the above-described casting sand and a binder.

The binder is used to solidify the casting sand. The binder contains at least a furan resin precursor.

The furan resin precursor turns to furan resin when cured. The furan resin precursor becomes in a state of completely cured (C stage) in the presence of acid at, for example, ordinary temperature (25°C).

Examples of the furan resin precursor include furfuryl alcohol and furan resin prepolymer.

Examples of the furan resin prepolymer include a homopolymer of furfuryl alcohol, a copolymer of furfuryl alcohol and aldehyde compound, and a copolymer of furfuryl alcohol and furfural.

The furan resin precursor can be used singly, or can be used in combination of two or more.

Of these furan resin precursors, preferably, furfuryl alcohol is used.

The content of the furan resin precursor in the binder is, for example, 50% by mass or more, preferably 60% by mass or more, more preferably 70% by mass or more, and for example, 95% by mass or less, preferably 90% by mass or less.

The binder preferably further contains an organic solvent. When the binder contains an organic solvent, the strength of the sand mold to be described later can be reliably improved without increasing the content of the furan resin precursor in the binder. Therefore, the strength of the sand mold to be described later can be improved and increase in ig. loss (ignition loss) caused by the furan resin precursor can be suppressed.

Examples of the organic solvent include aromatic hydrocarbons (e.g., benzene, toluene, xylene, etc.), ketones (e.g., acetone, methyl ethyl ketone, methyl isobutyl ketone, etc.), esters (e.g., ethyl acetate, butyl acetate, etc.), and alcohols (e.g., lower alcohols having 1 to 6 carbon atoms such as methanol, ethanol, n-propanol, n-butanol, isopropanol, and isobutanol). The organic solvent can be used singly, or can be used in combination of two or more.

Of these organic solvents, preferably, alcohols are used, more preferably, lower monohydric alcohols having 1 to 6 carbon atoms are used, even more preferably, butanol and isopropanol are used, particularly preferably isopropanol is used.

The content of the organic solvent in the binder is, for example, 1% by mass or more, preferably 4% by mass or more, more preferably 8% by mass or more, particularly preferably 10% by mass or more, and for example, 30% by mass or less, preferably 25% by mass or less, more preferably 20% by mass or less.

When the content of the organic solvent is the above-described lower limit or more, the strength of the sand mold to be described later can be reliably improved. When the content of the organic solvent is the above-described upper limit or less, the cleanability of the casting sand can be reliably improved.

The binder can contain, in addition to the above-described components, a curing accelerator as necessary.

Examples of the curing accelerator include resorcin, cresol, hydroquinone, phloroglucinol, methylenebisphenol, and bishydroxymethylfuran.

The content of the curing accelerator in the binder is, for example, 1% by mass or more, preferably 5% by mass or more, and for example, 30% by mass or less, preferably 15% by mass or less.

(3) Method for making sand mold (production method)

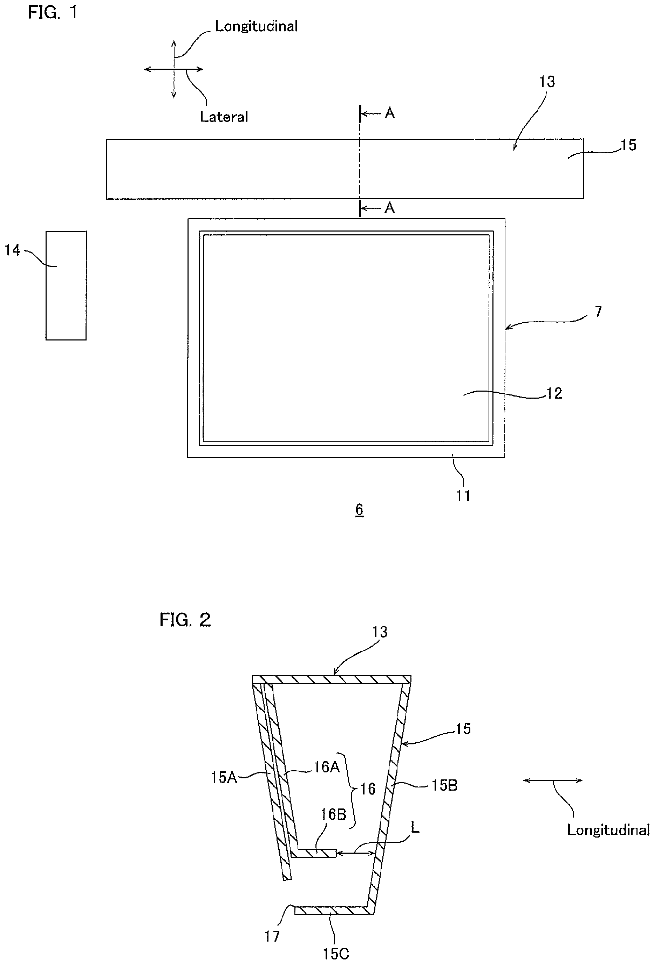

Next, three-dimensional additive manufacturing using the sand mold kit will be described with reference to FIGS. 1 to 6B.

As shown in FIG. 1, a 3D printer 6 is a device that allows manufacturing of a sand mold from 3D-CAD data. The 3D printer 6 includes a manufacturing unit 7, a recoater 13, a jet head 14, and an operation unit, which is not shown.

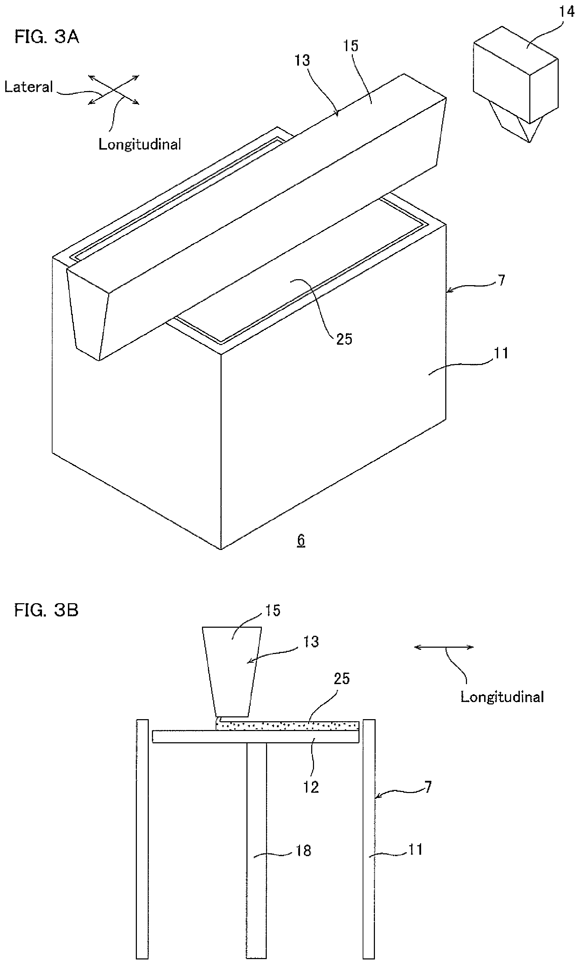

As shown in FIGS. 3A and 3B , the manufacturing unit 7 includes a job box 11, a stage 12, and a support axis 18.

The job box 11 has a substantially rectangular frame tube in plan view, and extends in up-down direction. The upper end portion of the job box 11 is open.

The stage 12 is a substantially rectangular plate in plan view. The stage 12 is positioned in the job box 11. The stage 12 is fixed at the upper end portion of the support axis 18. The support axis 18 is capable of ascending and descending in up-down direction. The stage 12 is movable in up-down direction in the job box 11 by ascending and descending of the support axis 18.

The recoater 13 can store the above-described casting sand. The recoater 13 can feed the stored casting sand to the stage 12. The recoater 13 can traverse above the stage 12 to be in parallel with the stage 12. In the following, the direction in which the recoater 13 can move is referred to as lateral direction (X direction), and the direction orthogonal to both of the lateral direction and the up-down direction is referred to as longitudinal direction (Y direction).

As shown in FIG. 2 , the recoater 13 includes a vessel 15 and a blade 16.

The vessel 15 can store the above-described casting sand. The vessel 15 extends in the longitudinal direction (ref: FIG. 1). The vessel 15 includes a first wall 15A, a second wall 15B, and a bottom wall 15C.

The first wall 15A and the second wall 15B are disposed with a space provided therebetween in the lateral direction. The bottom wall 15C is positioned at the lower end portion of the vessel 15.

The vessel 15 has an opening 17. The opening 17 allows communication inside out of the vessel 15. The opening 17 is formed at the lower end potion of the first wall 15A. The opening 17 is defined between the first wall 15A and the bottom wall 15C. The opening 17 extends in the longitudinal direction. The opening 17 has a size in the longitudinal direction that is substantially the same as the size in the longitudinal direction of the stage 12.

The blade 16 is disposed in the vessel 15. The blade 16 can vibrate. When the blade 16 vibrates, the casting sand stored in the vessel 15 is discharged from the opening 17. The blade 16 has a letter L shape when seen from a side, and has a plate 16A and a projection 16B.

The plate 16A is disposed to be spaced apart from the first wall 15A along the first wall 15A.

The projection 16B projects from the lower end portion of the plate 16A towards the second wall 15B. A free end portion of the projection 16B (end portion opposite to the plate 16A) is disposed to be spaced apart from the second wall 15B in the lateral direction. A length L in the lateral direction between the free end portion of the projection 16B and the second wall 15B is, for example, 0.3 mm or more, preferably 0.7 mm or more, and for example, 6.0 mm or less, preferably 1.5 mm or less.

The recoater 13 is connected to a casting sand tank, which is not shown, to which the casting sand is stored, and the casting sand is supplied from the casting sand tank when the amount of the casting sand stored in the vessel 15 is a predetermined value or less.

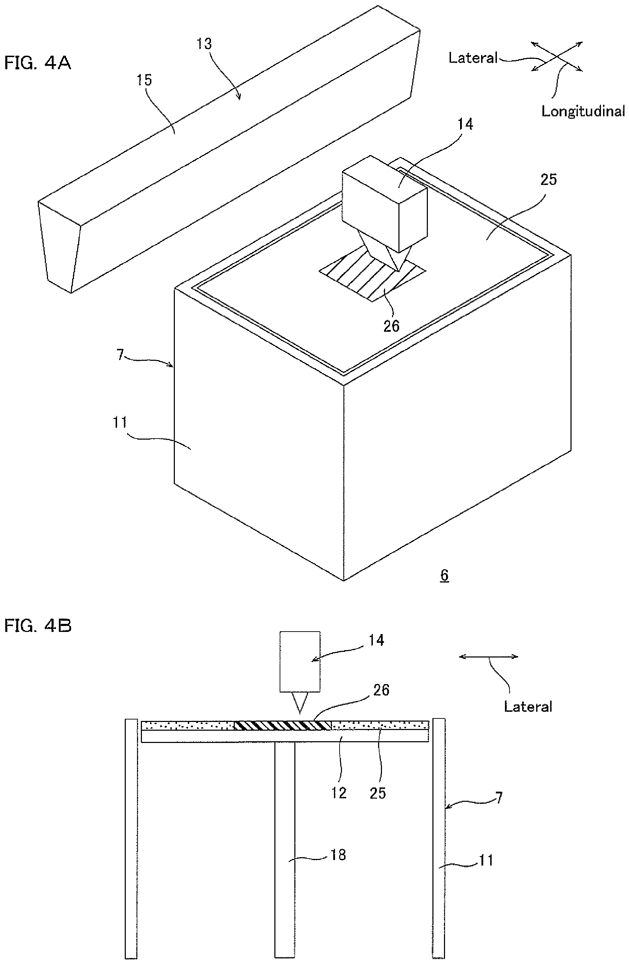

As shown in FIGS. 4A and 4B , the jet head 14 can feed the above-described binder to a casting sand layer formed on the stage 12. The jet head 14 is connected to a binder tank, which is not shown, that stores the binder, and the binder is supplied from the binder tank.

The jet head 14 is electrically connected with the operation unit, which is not shown. The jet head 14 can traverse above the stage 12 in the longitudinal direction and lateral direction to be in parallel with the stage 12.

In the 3D printer 6, as shown in FIGS. 3A and 3B , first, the recoater 13 in which the casting sand is stored moves in the lateral direction, and the blade 16 slightly vibrates, to thereby discharge the casting sand from the opening 17 onto the stage 12 to form a layer (ref: FIG. 2).

In this manner, a first casting sand layer 25 (casting sand layer) is formed on the stage 12.

The thickness of the first casting sand layer 25 is larger than the particle size of the largest particle included in the casting sand, and is, for example, 200 $\mu$m or more, preferably 250 $\mu$m or more, and for example, 400 $\mu$m or less, preferably 300 $\mu$m or less.

Then, as shown in FIGS. 4A and 4B , the jet head 14 adds the binder to a portion of the first casting sand layer 25 to be a sand mold based on 3D-CAD data input from the operation unit, which is not shown, to form a first added portion 26.

In the first added portion 26, the added binder makes contact with a solid acid catalyst contained in the casting sand and curing is caused, allowing the casting sand to adhere to each other. In this manner, the first added portion 26 is solidified by the binder cured product.

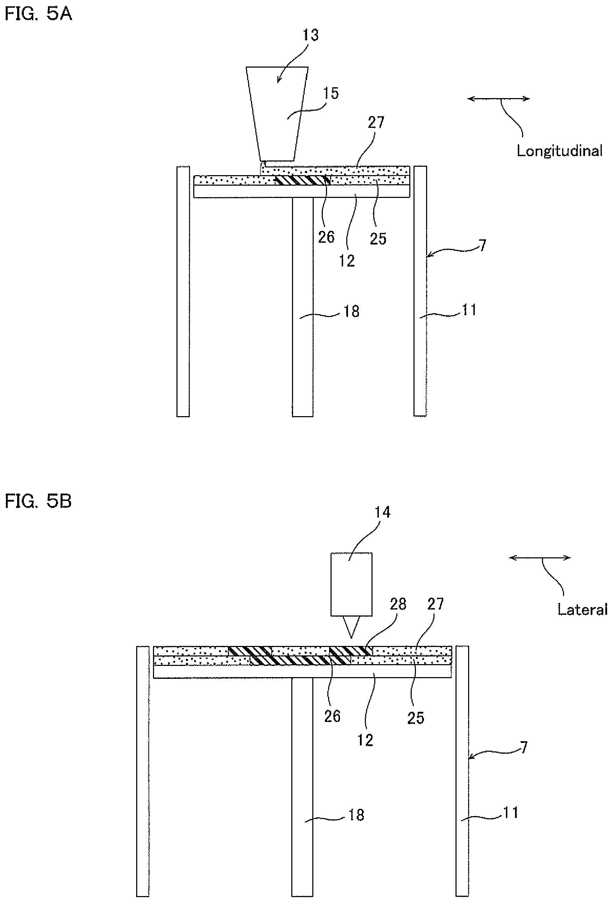

Then, as shown in FIG. 5A, the stage 12 descends to a degree of the thickness of the first casting sand layer 25. Thereafter, the recoater 13 discharges the casting sand again onto the first casting sand layer 25 to form a layer. In this manner, a second casting sand layer 27 (casting sand layer) is formed. Thereafter, as shown in FIG. 5B , the jet head 14 adds the binder to a portion of the second casting sand layer 27 to be the sand mold, to form a second added portion 28.

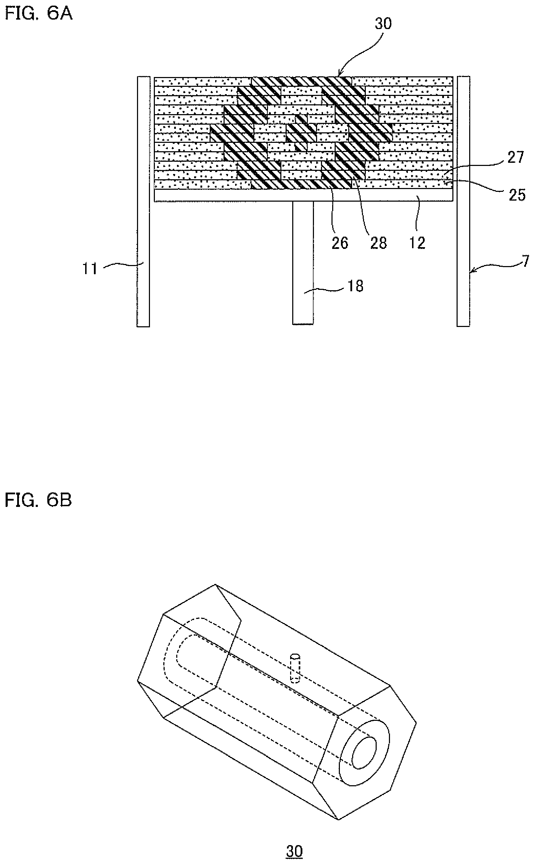

Similarly, as shown in FIGS. 6A and 6B, the casting sand layer formation by the recoater 13, and addition of the binder by the jet head 14 are repeated in sequence. When the casting sand layer formation is repeated n times, the first casting sand layer 25 to n-th casting sand layer are sequentially laminated, and the first added portion 26 to the n-th added portion are formed sequentially. The thickness range of each of the casting sand layers is the same as the thickness range of the above-described first casting sand layer 25.

Thereafter, the casting sand where the binder is not added is removed from a sand mold 30, for example, by air blow or the like.

The sand mold 30 is produced in the above-described manner. The sand mold 30 contains the casting sand, and the binder cured product that allows the casting sand to adhere to each other. In FIGS. 5B and 6A, for convenience, the surface of the sand mold 30 is shown as having uneven surface, but actually, the surface of the sand mold 30 is formed to be substantially smooth, as shown in FIG. 6B.

<Operations and effects>

The above-described casting sand includes sand and a solid acid catalyst. The solid acid catalyst is mixed with the sand. Therefore, when a binder is added to the casting sand, the binder can be quickly cured, so that a sand mold can be effectively made.

The solid acid catalyst preferably includes solid heteropoly acid. Therefore, when a binder is added to the casting sand, the binder can be reliably cured.

The solid acid catalyst preferably includes tungstosilicic acid. Therefore, the content of the solid acid catalyst in the casting sand can be reduced and the binder can be stably cured.

The solid acid catalyst preferably contains at least first particles. The first particles have an average primary particle size of 5 $\mu$m or less. The content of the first particles in the solid acid catalyst is preferably the above-described lower limit or more. Therefore, the strength of the sand mold can be improved.

The solid acid catalyst preferably contains at least second particles. The second particles have an average primary particle size of more than 5 $\mu$m and 40 $\mu$m or less. The content of the second particles in the solid acid catalyst is preferably the above-described lower limit or more.

Therefore, in three-dimensional additive manufacturing, excellent cleanability capable of smoothly removing the casting sand where the binder is not added from the sand mold can be ensured.

The sand mold kit includes the above-described casting sand and a binder. The binder contains a furan resin precursor and an organic solvent. The content of the organic solvent in the binder is in the above-described range.

Therefore, the strength of the sand mold manufactured with the sand mold kit can be reliably improved.

However, the binder has ig. loss (ignition loss) caused by the furan resin precursor. The ig. loss is desired to be reduced because it may cause gas defect in the casting. With the above-described configuration, since the binder contains an organic solvent, the strength of the sand mold can be improved without increasing the content of the furan resin precursor in the binder. As a result of this, the strength of the sand mold can be improved and increase in ig. loss can be suppressed.

The casting sand preferably further contains fine particles. The fine particles have an average primary particle size of 20 $\mu$m or less. Therefore, even containing of an organic solvent in the binder can ensure excellent cleanability of the casting sand.

Example

The present invention is described below with reference to Examples and Comparative Examples. The present invention is not limited to Examples in any way. The "parts" and "%" are based on mass unless otherwise specified. The specific numeral values used in the description below, such as mixing ratios (contents), physical property values, and parameters can be replaced with the corresponding mixing ratios (contents), physical property values, and parameters in the above-described "DESCRIPTION OF THE EMBODIMENTS", including the upper limit values (numeral values defined with "or less", and "less than") or the lower limit values (numeral values defined with "or more", and "more than").

<Preparation of artificial sand>

(Preparation Example 1)

Hard burned magnesia (MgO refractory raw material) and a mixture of synthetic mullite and molten alumina ($Al_2O_3$-$SiO_2$ refractory raw material) were introduced into a pulverizer. Then, the hard burned magnesia and the mixture of synthetic mullite and molten alumina were pulverized with mixing to produce mixed raw material particles.

The mixed raw material particles had an $Al_2O_3$ content of about 66% by mass, an MgO content of about 26% by mass, and an $SiO_2$ content of about 5% by mass. The mixed raw material particles had an average primary particle size of 2.3 $\mu$m.

Then, the mixed raw material particles were introduced into a rolling granulator. The mixed raw material particles were stirred at high speed for seven minutes while an aqueous solution of polyvinyl alcohol (granulation accelerator) was added thereto. In this manner, the mixed raw material particles were granulated to produce mixed granules.

Then, the mixed granules were sieved to adjust the particle size distribution of the mixed granules to 75 $\mu$m or more and 250 $\mu$m or less.

Then, the mixed granules were introduced into a sintering furnace and sintered at 1600°C under the atmosphere. This produced a sintered material. The sintered material had a particulate form.

Then, the sintered material was sieved to remove oversized particles and microparticles. The oversized particles had a primary particle size of more than 212 $\mu$m. The microparticles had a primary particle size of less than 53 $\mu$m.

In the above-described manner, artificial sand A (spinel sand) having a spinel-type crystal structure was prepared.

The artificial sand A had an $Al_2O_3$ content of 66.4% by mass, an $SiO_2$ content of 5.1% by mass, an MgO content of 26.6% by mass, an $Fe_2O_3$ content of 0.3% by mass, and other component content of 1.6% by mass. The acid consumption of the artificial sand A was 0.6 ml/50 g.

(Preparation Example 2)

Hard burned magnesia (MgO refractory raw material) was introduced into a pulverizer and then pulverized. This produced MgO raw material particles. The MgO raw material particles had an average primary particle size of 2.2 $\mu$m.

A mixture of synthetic mullite and molten alumina ($Al_2O_3$-$SiO_2$ refractory raw material) was introduced into a pulverizer separately from the hard burned magnesia (MgO refractory raw material), and then pulverized. This produced $Al_2O_3$-$SiO_2$ raw material particles. The $Al_2O_3$-$SiO_2$ raw material particles had an average primary particle size of 2.3 $\mu$m.

Then, the MgO raw material particles and the $Al_2O_3$-$SiO_2$ raw material particles were introduced into a rolling granulator. The MgO raw material particles and the $Al_2O_3$-$SiO_2$ raw material particles were stirred at high speed for seven minutes while an aqueous solution of polyvinyl alcohol (granulation accelerator) was added thereto. In this manner, the MgO raw material particles and the $Al_2O_3$-$SiO_2$ raw material particles were granulated with mixing to produce mixed granules.

The mixed granules had an $Al_2O_3$ content of about 66% by mass, an $SiO_2$ content of about 5% by mass, and an MgO content of about 26% by mass.

Then, the mixed granules were sieved to adjust the particle size distribution of the mixed granules to 75 $\mu$m or more and 250 $\mu$m or less.

Then, in the same manner as in Preparation Example 1, the mixed granules were sintered, followed by sieving the sintered material to prepare artificial sand B (spinel sand) having a spinel-type crystal structure.

The artificial sand B had an $Al_2O_3$ content of 66.1% by mass, an $SiO_2$ content of 5.1% by mass, an MgO content of 26.7% by mass, an $Fe_2O_3$ content of 0.4% by mass, and other component content of 1.7% by mass. The acid consumption of the artificial sand B was 1.5 ml/50 g.

(Preparation Example 3)

ESPEARL #75 (mullite sand, manufactured by YAMAKAWA SANGYO CO., LTD.) was prepared as artificial sand C.

(Preparation Example 4)

The artificial sand A prepared in Preparation Example 1 and natural silica sand were mixed so as to have a mass ratio of 40:60 (artificial sand A:natural silica sand). In this manner, mixed sand D was prepared.

<Preparation of acid catalyst>

(Preparation Example 5)

Tungstosilicic acid hydrate ($H_4[SiW_{12}O_{40}]\cdot30H_2O$) was dissolved in water (solvent) to prepare a tungstosilicic acid solution. The tungstosilicic acid solution had a concentration of 2.08 g/cm$^3$.

Then, the tungstosilicic acid solution was treated by a spray dryer (MDL-050CM, manufactured by GF Corporation) under the following conditions:

Spraying system: Four-fluid nozzle system
Inlet temperature: 170°C
Exhaust temperature: 100°C
Differential pressure in tower: 1.0 kPa
Bag filter differential pressure: 0.3 kPa
Air supply volume: 1.0 m$^3$/min
Nozzle air
Primary pressure: 0.6 MPaG, flow rate 1: 40 NL/min, flow rate 2: 40 NL/min,
Liquid feeding speed
Flow rate 1: 5 mL/min, flow rate 2: 5 mL/min.

This produced a dry powder.

Then, the dry powder was sieved through an SUS sieve (60 mesh) having a nominal opening of 250 $\mu$m, to thereby give undersize particles as a solid acid catalyst A.

The solid acid catalyst A contained tungstosilicic acid (chemical formula: $H_4[SiW_{12}O_{40}]$). The solid acid catalyst A had an average primary particle size of 0.8 $\mu$m and corresponded to first particles.

(Preparation Example 6)

The tungstosilicic acid solution prepared in the same manner as in Preparation Example 5 was treated by a spray dryer (CLT-8, manufactured by Ohkawara Kakohki Co., Ltd.) under the following conditions:

Spraying system: Atomizer type disc system
Inlet temperature: 175°C
Exhaust temperature: 115°C
Liquid feeding speed: 15 mL/min
Atomizer: 25 Hz.

This produced a dry powder.

Then, the dry powder was sieved through an SUS sieve (100 mesh) having a nominal opening of 150 $\mu$m, to thereby give undersize particles as a solid acid catalyst B.
The solid acid catalyst B contained tungstosilicic acid (chemical formula: $H_4[SiW_{12}O_{40}]$). The solid acid catalyst B had an average primary particle size of 19.4 $\mu$m and corresponded to second particles.

(Preparation Example 7)

A solid acid catalyst C was produced in the same manner as in Preparation Example 6 except that the tungstosilicic acid hydrate ($H_4[SiW_{12}O_{40}]\cdot30H_2O$) was changed to phosphotungstic acid hydrate ($H_3[PW_{12}O_{40}\cdot30H_2O$).
The solid acid catalyst C contained phosphotungstic acid (chemical formula: $H_3[PW_{12}O_{40}]$). The solid acid catalyst C had an average primary particle size of 22.1 $\mu$m and corresponded to second particles.

(Preparation Example 8)

A solid acid catalyst D was produced in the same manner as in Preparation Example 5 except that the tungstosilicic acid 30 hydrate ($H_4[SiW_{12}O_{40}]\cdot30H_2O$) was changed to phosphotungstic acid 30 hydrate ($H_3[PW_{12}O_{40}]\cdot30H_2O$).
The solid acid catalyst D contained phosphotungstic acid (chemical formula: $H_3[PW_{12}O_{40}]$). The solid acid catalyst D had an average primary particle size of 1.3 $\mu$m and corresponded to first particles.

(Preparation Example 9)

A solid acid catalyst E was produced in the same manner as in Preparation Example 5 except that the tungstosilicic acid 30 hydrate ($H_4[SiW_{12}O_{40}]\cdot30H_2O$) was changed to phosphomolybdic acid 30 hydrate ($H_3PMo_{12}O_{40}\cdot30H_2O$).
The solid acid catalyst E contained phosphomolybdic acid (chemical formula: $H_3[PMo_{12}O_{40}]$). The solid acid catalyst E had an average primary particle size of 1.5 $\mu$m and corresponded to first particles.

(Preparation Example 10)

A solid acid catalyst F was produced in the same manner as in Preparation Example 5 except that the tungstosilicic acid 30 hydrate ($H_4[SiW_{12}O_{40}]\cdot30H_2O$) was changed to phosphovanadotungstic acid 30 hydrate.
The solid acid catalyst F contained phosphovanadotungstic acid (chemical formula: $H_4PVW_{11}O_{40}$). The solid acid catalyst F had an average primary particle size of 1.5 $\mu$m and corresponded to first particles.

(Preparation Example 11)

A solid acid catalyst G was produced in the same manner as in Preparation Example 5 except that the tungstosilicic acid 30 hydrate ($H_4[SiW_{12}O_{40}]\cdot30H_2O$) was changed to phosphovanadomolybdic acid 30 hydrate.
The solid acid catalyst G contained phosphovanadomolybdic acid (chemical formula: $H_4PVMo_{11}O_{40}$). The solid

acid catalyst G had an average primary particle size of 1.5 μm and corresponded to first particles.

(Preparation Example 12)

An aqueous solution of p-toluenesulfonic acid containing p-toluenesulfonic acid (PTS), sulfuric acid, and water was prepared as a liquid acid catalyst H. The liquid acid catalyst H had a PTS concentration of 50% by mass to 70% by mass and a sulfuric acid concentration of 2.0% by mass or less.

<Preparation of fine particles>

(Preparation Example 13)

Zircon fine particles (A-PAX, manufactured by KINSEI MATEC CO., LTD., average primary particle size: 1 μm) were prepared as zircon fine particles A.

(Preparation Example 14)

Zircon fine particles (Zirconium Flour, manufactured by KINSEI MATEC CO., LTD., average primary particle size: 15 μm) were prepared as zircon fine particles B.

<Examples 1 to 39 and Comparative Examples 1, 2>

The sand (artificial sand A to C and mixed sand D) prepared in Preparation Examples, the acid catalyst (solid acid catalysts A to G and liquid acid catalyst H) prepared in Preparation Examples, and as necessary, the fine particles (zircon fine particles A and B) prepared in Preparation Examples were mixed at ordinary temperature (25°C) so as to be formulated as shown in Tables 1 to 6. In this manner, casting sand was prepared.

Furfuryl alcohol (furan resin precursor), resorcin (curing accelerator), and as necessary, an organic solvent were mixed at ordinary temperature (25°C) so as to be formulated as shown in Tables 1 to 6. In this manner, a binder was prepared.

A sand mold kit was prepared in the above-described manner.

<Bending strength test>

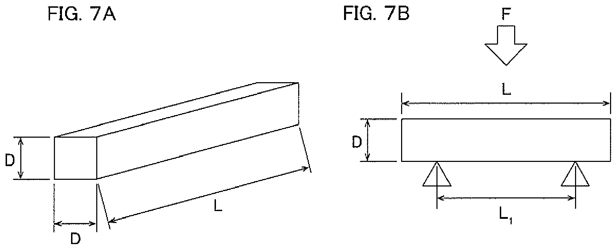

The sand mold kit prepared in Examples and Comparative Examples was set in a three-dimensional additive manufacturing device, and formation of a casting sand layer by a recoater, and addition of the binder with a jet head were repeated in sequence, to thereby make a test pillar (sand mold) of a regular square prism having a side D of 14.0 mm and a length L of 70.0 mm as shown in FIG. 7A. The casting sand layers each had a thickness of 0.28 mm. The length L (ref: FIG. 2 ) between a free end portion of a projection and a second wall in the recoater was 1.0 mm.

The test pillar was allowed to stand at room temperature of 24°C and a humidity of 45% for one hour or 24 hours.

As shown in FIG. 7B, in order to carry out the bending strength test by applying three-point bending to the test pillar, the test pillar was supported by two flucrums so that the length direction of the test pillar became horizontal. A distance $L_1$ between the two flucrums was 50 mm. In this manner, the test pillar was set in a test device (SC-200D-B, manufactured by Tokai SE Co., Ltd.).

Then, a load F was applied in the vertical direction relative to the center of the test pillar in the length direction. From the load at the time when the test pillar was broken, the bending strength (strength) was calculated by the following equation (1).

$$\text{Equation [1]:}$$

$$\text{Bending strength} = 3FL_1/2D^3$$

where F is a load [kg], $L_1$ is a distance [cm] between the flucrums, and D is a length [cm] of a side of the test pillar.

The above-described bending strength test was repeated five times, and an average value of the bending strength was calculated. The results are shown in Tables 1 to 6 as an average value of the bending strength calculated after the test pillar was allowed to stand for one hour regarded as strength - 1 h, and an average value of the bending strength calculated after the test pillar was allowed to stand for 24 hours regarded as strength - 24 h.

In Comparative Examples 1 and 2, the test pillar that had been allowed to stand for one hour was not cured. Therefore, the bending strength of the test pillar after being allowed to stand for one hour was not measurable.

The bending strength of the test pillar after being allowed to stand for one hour (strength - 1 h) and the bending strength thereof after being allowed to stand for 24 hours (strength - 24 h) were evaluated based on the criteria below.

Bending strength after being allowed to stand for one hour (strength - 1 h):
Good: 20 kg/cm$^2$ or more;
Fair: 1 kg/cm$^2$ or more and less than 20 kg/cm$^2$; and
Bad: Not cured.
Bending strength after being allowed to stand for 24 hours (strength - 24 h):
Good: 30 kg/cm$^2$ or more;
Fair: 1 kg/cm$^2$ or more and less than 30 kg/cm$^2$; and
Bad: Not cured.

<Cleanability test>

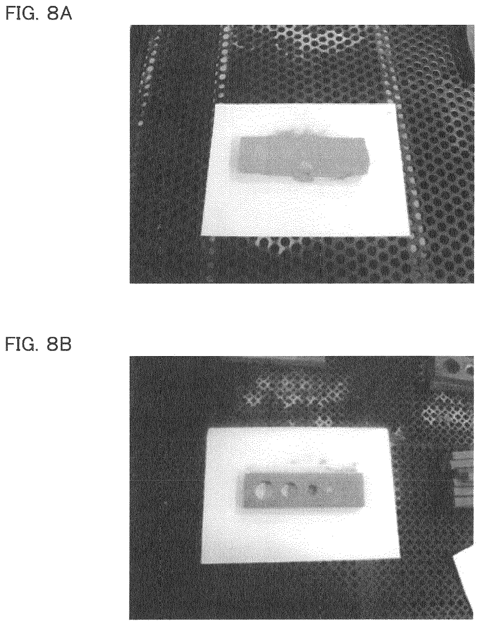

The sand mold kit prepared in Examples and Comparative Examples was set in a three-dimensional additive manufacturing device, and formation of a casting sand layer by a recoater, and addition of the binder with a jet head were repeated in sequence, to thereby make a test piece (sand mold) having a plurality of (six) holes having different sizes as shown in FIG. 8B.

The test piece had a flat rectangular plate shape in plan view. The test piece had a thickness of 14.0 mm. The test piece had a longitudinal size of 180.0 mm. The test piece had a widthwise size of 50.0 mm. The inner diameters of the six holes were in ascending order, 5.0 mm, 10.0 mm, 15.0 mm, 20.0 mm, 25.0 mm, and 30.0 mm.

The casting sand layers each had a thickness of 0.28 mm. The length L (ref: FIG. 2 ) between a free end portion of a projection and a second wall in the recoater was 1.0 mm.

Then, an operator was taken out the test piece from the casting sand layer. FIG. 8A shows a photograph of a test piece using the casting sand of Comparative Example 1 taken from the thickness direction of the test piece. FIG. 8B shows a photograph of a test piece using the casting sand of Example 26 taken from the thickness direction of the test piece.

Thereafter, the casting sand where the binder was not added (hereinafter referred to as uncured sand) was removed from the test piece by air blow. After the air blow, as necessary, the uncured sand was further removed from the test piece with a brush.

The cleanability was evaluated based on the criteria below.

4 or more: The uncured sand can be smoothly removed from the test piece only by air blow;
3 or more and less than 4: Most of the uncured sand (50% or more) can be removed from the test piece by air blow and the remaining uncured sand can be smoothly removed with a brush;
2 or more and less than 3: Some of the uncured sand (10% or more and less than 50%) can be removed from the test piece by air blow and the remaining uncured sand can be removed with a brush;
1 or more and less than 2: Very little of the uncured sand (less than 10%) can be removed from the test piece by air blow and the remaining uncured sand can be removed with a brush; and
0 or more and less than 1: Almost no uncured sand can be removed from the test piece by air blow, but it can be removed with a brush.

<Ig. loss measurement

In the same manner as the above-described bending strength test, a test pillar (sand mold) was made. Then, a sample was taken from the test pillar and ig. loss was measured in accordance with JIS Z2601-1993 Annex 6.

The ig. loss was evaluated based on the criteria below. The results are shown in Tables 1 to 6.

Excellent: Less than 1.5%;
Good: Less than 2.0% and 1.5% or less; and
Fair: 2.0% or more.

[Table 1]

Table 1

| No. | | | | Comparative Example 1 | Comparative Example 2 | Example 1 | Example 2 | Example 3 | Example 4 | Example 5 | Example 6 |
|---|---|---|---|---|---|---|---|---|---|---|---|
| Formulation [mass%] — Casting sand | Sand | Artificial sand | A | - | 100 | 100 | - | - | 100 | 100 | 100 |
| | | | B | - | - | - | 100 | - | - | - | - |
| | | | C | - | - | - | - | 100 | - | - | - |
| | | Mixed sand | D | 100 | - | - | - | - | - | - | - |
| | Acid catalyst | Solid acid catalyst | A | - | - | 0.40 | 0.40 | 0.40 | - | 0.40 | 0.40 |
| | | | B | - | - | - | - | - | - | - | - |
| | | | C | - | - | - | - | - | 0.80 | — | — |
| | | Liquid acid catalyst | H | 0.13 | 0.13 | - | - | - | - | — | — |
| | Fine particles | Zircon fine particles | A | - | - | - | - | - | - | - | - |
| | | | B | - | - | - | - | - | - | - | - |
| | Binder | Furan resin precursor | Furfuryl alcohol | 90 | 90 | 90 | 90 | 90 | 90 | 90 | 90 |
| | | Curing accelerator | Resorcin | 10 | 10 | 10 | 10 | 10 | 10 | 10 | 10 |
| | | Organic solvent | Isopropanol | — | — | — | — | — | — | — | — |
| | | | Butanol | — | — | — | — | — | — | 15 | 20 |
| Content of solid acid catalyst A in acid catalyst | | | [mass%] | - | - | 100 | 100 | 100 | - | 100 | 100 |
| Content of solid acid catalyst B in acid catalyst | | | [mass%] | - | - | - | - | - | - | - | - |
| Content of organic solvent in binder | | | [mass%] | - | - | - | - | - | - | 13.0 | 16.7 |
| Evaluation test | Strength -1 h | | [kg/cm$^2$] | Unmeasurable | Unmeasurable | 24.7 | 11.0 | 7.6 | 15.4 | 15.6 | 18.7 |
| | | | Evaluation | Bad | Bad | Good | Fair | Fair | Fair | Fair | Fair |
| | Strength - 24 h | | [kg/cm$^2$] | 31.1 | 28.0 | 21.2 | 14.5 | 18.3 | 20.3 | 36.8 | 41.8 |
| | | | Evaluation | Good | Fair | Fair | Fair | Fair | Fair | Good | Good |
| | Cleanability | | Point | 1 | 1 | 4 | 3 | 0 | 4 | 2 | 2 |
| | | | Evaluation | Fair | Fair | Good | Good | Fair | Good | Good | Good |
| | Ig. Loss | | [%] | 1.7 | - | 1.6 | 1.9 | 1.5 | - | 1.5 | 1.6 |
| | | | Evaluation | Good | - | Good | Good | Good | - | Good | Good |

[Table 2]

[Table 3]

Table 2

| No. | | | | | Example 7 | Example 8 | Example 9 | Example 10 | Example 11 | Example 12 | Example 13 | Example 14 |
|---|---|---|---|---|---|---|---|---|---|---|---|---|
| Formulation [mass%] | Casting sand | Sand | Artificial sand | A | 100 | 100 | 100 | 100 | 100 | 100 | 100 | 100 |
| | | | | B | - | - | - | - | - | - | - | - |
| | | | | C | - | - | - | - | - | - | - | - |
| | | | Mixed sand | D | - | - | - | - | - | - | - | - |
| | | Acid catalyst | Solid acid catalyst | A | 0.40 | 0.10 | 0.40 | 0.40 | 0.10 | 0.40 | 0.40 | 0.40 |
| | | | | B | - | 0.30 | — | — | 0.30 | — | — | — |
| | | | | C | — | — | — | — | — | — | — | — |
| | | | Liquid acid catalyst | H | — | — | — | — | — | — | — | — |
| | | Fine particles | Zircon fine particles | A | - | 1 | — | — | 1 | — | — | — |
| | | | | B | - | - | - | - | - | - | - | - |
| | Binder | Furan resin precursor | Furfuryl alcohol | | 90 | 90 | 90 | 90 | 90 | 90 | 90 | 90 |
| | | Curing accelerator | Resorcin | | 10 | 10 | 10 | 10 | 10 | 10 | 10 | 10 |
| | | Organic solvent | Isopropanol | | 10 | 10 | 15 | 5 | 5 | 40 | 20 | 30 |
| | | | Butanol | | — | - | - | - | - | - | - | - |
| Content of solid acid catalyst A in acid catalyst | | | | [mass%] | 100 | 25 | 100 | 100 | 25 | 100 | 100 | 100 |
| Content of solid acid catalyst B in acid catalyst | | | | [mass%] | - | 75 | - | - | 75 | - | - | - |
| Content of organic solvent in binder | | | | [mass%] | 9.1 | 9.1 | 13.0 | 4.8 | 4.8 | 28.6 | 16.7 | 23.1 |
| Evaluation test | Strength -1 h | | [kg/cm$^2$] | | 14.2 | 12.7 | 27.7 | 9.0 | 7.9 | 25.7 | 29.6 | 24.5 |
| | | | Evaluation | | Fair | Fair | Good | Fair | Fair | Good | Good | Good |
| | Strength - 24 h | | [kg/cm$^2$] | | 24.5 | 20.2 | 20.7 | 15.4 | 18.1 | 23.3 | 36.2 | 35.6 |
| | | | Evaluation | | Fair | Fair | Fair | Fair | Fair | Fair | Good | Good |
| | Cleanability | | Point | | 3 | 3.5 | 2.5 | 3 | 4.5 | 0 | 2 | 0.5 |
| | | | Evaluation | | Good | Good | Good | Good | Good | Fair | Good | Fair |
| | Ig. Loss | | [%] | | 1.4 | 2.3 | 1.8 | 1.6 | 1.7 | 1.3 | 1.4 | 1.2 |
| | | | Evaluation | | Excellent | Fair | Good | Good | Good | Excellent | Excellent | Excellent |

Table 3

| | | | | Example 15 | Example 16 | Example 17 | Example 18 | Example 19 | Example 20 | Example 21 |
|---|---|---|---|---|---|---|---|---|---|---|
| Formulation [mass%] | Casting sand | Sand | Artificial sand A | 100 | 100 | 100 | 100 | 100 | 100 | 100 |
| | | | Artificial sand B | - | - | - | - | - | - | - |
| | | | Artificial sand C | - | - | - | - | - | - | - |
| | | | Mixed sand D | - | - | - | - | - | - | - |
| | | Acid catalyst | Solid acid catalyst A | 0.10 | - | 0.20 | 0.30 | 0.10 | 0.10 | 0.10 |
| | | | Solid acid catalyst B | 0.30 | 0.40 | 0.20 | 0.10 | 0.30 | 0.30 | 0.30 |
| | | | Solid acid catalyst C | — | — | — | — | — | — | — |
| | | | Liquid acid catalyst H | — | — | — | — | — | — | — |
| | | Fine particles | Zircon fine particles A | — | — | — | — | 1.2 | 1 | 0.8 |
| | | | Zircon fine particles B | - | - | - | - | - | - | - |
| | Binder | Furan resin precursor | Furfuryl alcohol | 90 | 90 | 90 | 90 | 90 | 90 | 90 |
| | | Curing accelerator | Resorcin | 10 | 10 | 10 | 10 | 10 | 10 | 10 |
| | | Organic solvent | Isopropanol | 20 | 20 | 20 | 20 | 20 | 20 | 20 |
| | | | Butanol | - | - | - | - | - | - | - |
| | Content of solid acid catalyst A in acid catalyst [mass%] | | | 25 | - | 50 | 75 | 25 | 25 | 25 |
| | Content of solid acid catalyst B in acid catalyst [mass%] | | | 75 | 100 | 50 | 25 | 75 | 75 | 75 |
| | Content of organic solvent in binder [mass%] | | | 16.7 | 16.7 | 16.7 | 16.7 | 16.7 | 16.7 | 16.7 |
| Evaluation test | Strength - 1 h | [kg/cm²] | | 27.7 | 20.0 | 23.4 | 28.2 | 14.6 | 15.2 | 17.2 |
| | | Evaluation | | Good | Good | Good | Good | Fair | Fair | Fair |
| | Strength - 24 h | [kg/cm²] | | 31.2 | 25.6 | 36.9 | 35.3 | 24.7 | 24.2 | 24.2 |
| | | Evaluation | | Good | Fair | Good | Good | Fair | Fair | Fair |
| | Cleanability | Point | | 3 | 3.5 | 2.5 | 2 | 4.5 | 4.5 | 3 |
| | | Evaluation | | Good | Good | Good | Good | Good | Good | Good |
| | Ig. Loss | [%] | | 1.5 | 1.4 | 1.3 | 1.5 | 1.5 | 1.3 | 1.3 |
| | | Evaluation | | Good | Excellent | Excellent | Good | Good | Excellent | Excellent |

[Table 4]

[Table 5]

Table 4

| No. | | | | | Example 22 | Example 23 | Example 24 | Example 25 | Example 26 | Example 27 | Example 28 | Example 29 |
|---|---|---|---|---|---|---|---|---|---|---|---|---|
| Formulation [mass%] | Casting sand | Sand | Artificial sand | A | 100 | 100 | 100 | 100 | 100 | 100 | 100 | 100 |
| | | | | B | - | - | - | - | - | - | - | - |
| | | | | C | - | - | - | - | - | - | - | - |
| | | | Mixed sand | D | - | - | - | - | - | - | - | - |
| | | Acid catalyst | Solid acid catalyst | A | 0.20 | 0.15 | 0.15 | 0.15 | - | 0.15 | - | 0.10 |
| | | | | B | 0.20 | 0.25 | 0.15 | 0.35 | 0.50 | 0.35 | 0.40 | 0.40 |
| | | | | C | — | — | — | — | — | — | — | — |
| | | | Liquid acid catalyst | H | — | — | — | — | — | — | — | — |
| | | Fine particles | Zircon fine particles | A | 1 | 1 | 1 | 1 | 1 | 1 | 1 | 1 |
| | | | | B | - | - | - | - | - | - | - | - |
| | Binder | Furan resin precursor | Furfuryl alcohol | | 90 | 90 | 90 | 90 | 90 | 90 | 90 | 90 |
| | | Curing accelerator | Resorcin | | 10 | 10 | 10 | 10 | 10 | 10 | 10 | 10 |
| | | Organic solvent | Isopropanol | | 20 | 20 | 20 | 20 | 20 | - | 20 | 20 |
| | | | Butanol | | - | - | - | - | - | 20 | - | - |
| Content of solid acid catalyst A in acid catalyst | | | | [mass%] | 50 | 38 | 50 | 30 | - | 30 | - | 20 |
| Content of solid acid catalyst B in acid catalyst | | | | [mass%] | 50 | 63 | 50 | 70 | 100 | 70 | 100 | 80 |
| Content of organic solvent in binder | | | | [mass%] | 16.7 | 16.7 | 16.7 | 16.7 | 16.7 | 16.7 | 16.7 | 16.7 |
| Evaluation test | Strength -1 h | | [kg/cm$^2$] | | 25.3 | 21.3 | 11.2 | 31.3 | 21.6 | 27.5 | 20.2 | 27.4 |
| | | | Evaluation | | Good | Good | Fair | Good | Good | Good | Good | Good |
| | Strength - 24 h | | [kg/cm$^2$] | | 26.9 | 25.1 | 22.5 | 30.5 | 29.5 | 42.3 | 30.3 | 24.8 |
| | | | Evaluation | | Fair | Fair | Fair | Good | Fair | Good | Good | Fair |
| | Cleanability | | Point | | 3 | 3 | 4 | 4 | 4.5 | 2 | 3.5 | 3.5 |
| | | | Evaluation | | Good | Good | Good | Good | Good | Good | Good | Good |
| | Ig. Loss | | [%] | | 1.3 | 1.2 | 1.4 | 1.5 | 1.3 | 1.3 | - | - |
| | | | Evaluation | | Excellent | Excellent | Excellent | Good | Excellent | Excellent | - | - |

[Table 6]

Table 5

| No. | | | | Example 30 | Example 31 | Example 32 | Example 33 | Example 34 | Example 35 |
|---|---|---|---|---|---|---|---|---|---|
| Formulation [mass%] — Casting sand — Sand | Artificial sand | A | | 100 | 100 | 100 | 100 | 100 | 100 |
| | | B | | - | - | - | - | - | - |
| | | C | | - | - | - | - | - | - |
| | Mixed sand | D | | - | - | - | - | - | - |
| Acid catalyst | Solid acid catalyst | A | | - | - | - | - | 0.20 | - |
| | | B | | 0.60 | 0.60 | 0.50 | 0.50 | 0.30 | 0.50 |
| | | C | | — | — | — | — | — | — |
| | Liquid acid catalyst | H | | — | — | — | — | — | — |
| Fine particles | Zircon fine particles | A | | 1 | - | 1 | 1.2 | 1 | - |
| | | B | | - | - | - | - | - | 1 |
| Binder — Furan resin precursor | Furfuryl alcohol | | | 90 | 90 | 90 | 90 | 90 | 90 |
| Curing accelerator | Resorcin | | | 10 | 10 | 10 | 10 | 10 | 10 |
| Organic solvent | Isopropanol | | | 20 | 20 | - | - | 20 | 20 |
| | Butanol | | | - | - | 20 | 20 | - | - |
| Content of solid acid catalyst A in acid catalyst | | [mass%] | | - | - | - | - | 40 | - |
| Content of solid acid catalyst B in acid catalyst | | [mass%] | | 100 | 100 | 100 | 100 | 60 | 100 |
| Content of organic solvent in binder | | [mass%] | | 16.7 | 16.7 | 16.7 | 16.7 | 16.7 | 16.7 |
| Evaluation test — Strength -1 h | | [kg/cm²] | | 26.4 | 32.5 | 20.7 | 16.2 | 28.1 | 29.4 |
| | | Evaluation | | Good | Good | Fair | Fair | Good | Good |
| Strength - 24 h | | [kg/cm²] | | 26.3 | 36.4 | 32.1 | 32.3 | 35.5 | 30.4 |
| | | Evaluation | | Fair | Good | Good | Good | Good | Good |
| Cleanability | | Point | | 3.5 | 0 | 4 | 4 | 3 | 3 |
| | | Evaluation | | Good | Fair | Good | Good | Good | Good |
| Ig. Loss | | [%] | | - | - | - | - | - | - |
| | | Evaluation | | - | - | - | - | - | - |

Table 6

| No. | | | | | Example 36 | Example 37 | Example 38 | Example 39 |
|---|---|---|---|---|---|---|---|---|
| Formulation [mass%] | Casting sand | Sand | Artificial sand | A | 100 | 100 | 100 | 100 |
| | | | | B | - | - | - | - |
| | | | | C | - | - | - | - |
| | | | Mixed sand | D | - | - | - | - |
| | | Acid catalyst | Solid acid catalyst | D | 0.40 | - | - | - |
| | | | | E | - | 0.40 | - | - |
| | | | | F | — | — | 0.40 | — |
| | | | | G | - | - | - | 0.40 |
| | | | Liquid acid catalyst | H | — | — | — | — |
| | | Fine particles | Zircon fine particles | A | - | - | - | - |
| | | | | B | - | - | - | - |
| | Binder | Furan resin precursor | Furfuryl alcohol | | 90 | 90 | 90 | 90 |
| | | Curing accelerator | Resorcin | | 10 | 10 | 10 | 10 |
| | | Organic solvent | Isopropanol | | 20 | 20 | 20 | 20 |
| | | | Butanol | | - | - | - | - |
| Content of organic solvent in binder | | | | [mass%] | 16.7 | 16.7 | 16.7 | 16.7 |
| Evaluation test | | Strength -1 h | [kg/cm$^2$] | | 20.8 | 15.6 | 14.9 | 16.1 |
| | | | Evaluation | | Good | Fair | Fair | Fair |
| | | Strength - 24 h | [kg/cm$^2$] | | 25.3 | 18.2 | 14.1 | 18.9 |
| | | | Evaluation | | Fair | Fair | Fair | Fair |
| | | Cleanability | Point | | 2 | 2 | 2 | 3 |
| | | | Evaluation | | Good | Good | Good | Good |
| | | Ig. Loss | [%] | | 1.1 | 1.0 | 1.1 | 1.1 |
| | | | Evaluation | | Excellent | Excellent | Excellent | Excellent |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

Industrial Applicability

The casting sand and the sand mold kit according to the present invention can be suitably used for a sand mold used for production of various industrial products, in particular, for a sand mold produced by three-dimentional additive manufacturing.

Description of Reference Numerals

6 3D printer

**Claims**

1.    Casting sand comprising sand and a solid acid catalyst mixed with the sand.

2.    The casting sand according to claim 1, wherein the solid acid catalyst includes solid heteropoly acid.

3. The casting sand according to claim 2, wherein the solid acid catalyst includes tungstosilicic acid.

4. The casting sand according to claim 1, wherein the solid acid catalyst comprises at least first particles having an average primary particle size of 5 $\mu$m or less, and
a content of the first particles in the solid acid catalyst is 20% by mass or more.

5. The casting sand according to claim 1, wherein the solid acid catalyst comprises at least second particles having an average primary particle size of more than 5 $\mu$m and 40 $\mu$m or less, and
a content of the second particles in the solid acid catalyst is 20% by mass or more.

6. A sand mold kit comprising:

   casting sand defined in claim 1; and
   a binder comprising a furan resin precursor and an organic solvent, the binder for solidifying the casting sand,
   wherein a content of the organic solvent in the binder is 10% by mass or more and 30% by mass or less.

7. The sand mold kit according to claim 6, wherein the casting sand further comprises fine particles having an average primary particle size of 20 $\mu$m or less.

FIG. 1

Longitudinal

Lateral

A

13

15

14

A

7

12

11

6

FIG. 2

13

15

15A

16A

16

15B

16B

L

Longitudinal

17

15C

FIG. 3A

Lateral

Longitudinal

14

13

15

25

7

11

6

FIG. 3B

15

13

25

12

7

18

11

Longitudinal

FIG. 4A

Lateral

Longitudinal

13

15

14

25

26

7

11

6

FIG. 4B

14

26

25

12

7

18

11

Lateral

FIG. 5A

Longitudinal

FIG. 5B

Lateral

FIG. 6A

FIG. 6B

30

FIG. 7A

FIG. 7B

FIG. 8A

FIG. 8B

## INTERNATIONAL SEARCH REPORT

International application No.

PCT/JP2020/043298

### A. CLASSIFICATION OF SUBJECT MATTER

B22C 1/22(2006.01)i; B22C 1/02(2006.01)i; B22C 1/10(2006.01)i; B22C 9/02(2006.01)i; B33Y 70/00(2020.01)i

FI: B22C1/22 C; B22C1/02 Z; B22C1/10 Z; B22C9/02 103D; B33Y70/00

According to International Patent Classification (IPC) or to both national classification and IPC

### B. FIELDS SEARCHED

Minimum documentation searched (classification system followed by classification symbols)

B22C1/22; B22C1/02; B22C1/10; B22C9/02; B33Y70/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X Y A | JP 2017-109212 A (KAO CORP.) 22 June 2017 (2017-06-22) claims | 1, 4-6 7 2, 3 |
| X Y A | WO 2016/143050 A1 (TECHNOLOGY RESEARCH ASSOCIATION FOR FUTURE ADDITIVE MANUFACTURING) 15 September 2016 (2016-09-15) paragraphs [0023]-[0049] | 1, 4-6 7 2, 3 |
| Y | JP 2011-51010 A (HOKKAIDO RESEARCH ORGANIZATION) 17 March 2011 (2011-03-17) claim 3, paragraph [0020], fig. 1 | 7 |
| A | WO 2018/224093 A1 (ASK CHEMICALS GMBH) 13 December 2018 (2018-12-13) entire text | 1-7 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 December 2020 (23.12.2020) | 12 January 2021 (12.01.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/043298

| Patent Documents referred in the Report | Publication Date | Patent Family | Publication Date |
|---|---|---|---|
| JP 2017-109212 A | 22 Jun. 2017 | (Family: none) | |
| WO 2016/143050 A1 | 15 Sep. 2016 | US 2017/0037222 A1 paragraphs [0032]-[0069] EP 3093081 A1 CN 107427903 A | |
| JP 2011-51010 A | 17 Mar. 2011 | (Family: none) | |
| WO 2018/224093 A1 | 13 Dec. 2018 | US 2020/0139427 A1 EP 3634726 A1 DE 102017112681 A1 CA 3063511 A1 CN 110719838 A KR 10-2020-0014793 A JP 2020-522388 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013240799 A
- JP 61063333 A
- JP 2003251434 A
- JP 2016107320 A